# FASCICULE DE BREVET EUROPEEN

(11) **EP 3 416 886 B1**
(45) Date de publication et mention de la délivrance du brevet: **05.05.2021**
(21) Numéro de dépôt: 17710324.9
(22) Date de dépôt: 15.02.2017
(51) Int. Cl.: B64C 27/12, F16H 1/22, B64D 35/06, B64D 35/08

(54) **RÉDUCTEUR DE VITESSE A INVERSION DE SENS DE ROTATION ENTREE/SORTIE**
UNTERSETZUNGSGETRIEBE MIT EIN-/AUSGABEDREHUNGSUMKEHR
REDUCTION GEAR WITH INPUT/OUTPUT ROTATION REVERSAL

(30) Priorité: 16.02.2016 FR 1651245
(43) Date de publication de la demande: 26.12.2018
(73) Titulaire: Safran Transmission Systems, 92700 Colombes (FR)
(72) Inventeur: FERAUD, Benjamin, 77550 Moissy-Cramayel (FR); MOREAU DE LIZOREUX, Aldric, Renaud, Gabriel, Marie, 77550 Moissy-Cramayel (FR); MORELLI, Boris, 77550 Moissy-Cramayel (FR); AMIET, Maxime, 77550 Moissy-Cramayel (FR); MATHIEU, Antoine, 77550 MOISSY-CRAMAYEL (FR)
(74) Mandataire: Regimbeau
(86) Numéro de dépôt international: PCT/FR2017/050343
(87) Numéro de publication internationale: WO 2017/140981

(56) Documents cités:
- EP-A1- 0 172 104
- WO-A1-2011/124603
- FR-A1- 2 561 341
- US-A- 5 528 960
- US-A1- 2007 219 044
- US-A1- 2013 160 605

## Description

### DOMAINE DE L'INVENTION

L'invention concerne un réducteur de vitesse comprenant un arbre d'entrée, un arbre de sortie, et deux arbres intermédiaires transmettant un couple depuis l'arbre d'entrée à l'arbre de sortie.

L'invention s'applique notamment à des réducteurs d'hélices de turbomachine, par exemple de type turbopropulseur.

### ETAT DE LA TECHNIQUE

Il existe des aéronefs propulsés par un ensemble de plusieurs turbopropulseurs, c'est-à-dire de turbomachines comprenant un arbre rotatif entrainé en rotation par un ensemble comprenant un compresseur et une turbine, et une hélice qui est entrainée en rotation par cet arbre rotatif par l'intermédiaire d'un réducteur ou PGB pour Power Gearbox.

Pour ce type d'aéronef notamment, il peut être intéressant pour des raisons aérodynamiques que certaines hélices tournent dans un sens et que d'autres hélices tournent dans un sens opposé. Ceci implique, en employant un turbopropulseur par hélice, les turbopropulseurs étant identiques pour toutes les hélices, d'inverser la rotation de certaines hélices par rapport à leur turbopropulseur respectif au niveau du réducteur.

A cet égard, on connaît un type de réducteur pourvu d'un système d'inversion.

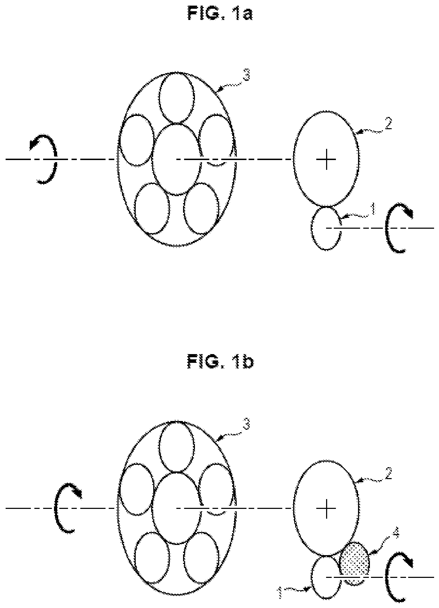

La figure 1a représente un type de réducteur connu dépourvu d'un système d'inversion. Ce réducteur comporte un premier étage de réduction formé par un arbre d'entrée portant un pignon 1 et engrenant avec un pignon 2 d'un arbre intermédiaire, et un deuxième étage de réduction formé par un train épicycloïdal 3, dont un planétaire est solidaire de l'arbre intermédiaire, et le porte satellites est l'arbre de sortie.

L'inversion du sens de rotation entre l'arbre d'entrée et l'arbre de sortie est obtenue en interposant un pignon supplémentaire 4 entre le pignon 1 de l'arbre d'entrée et le pignon 2 de l'arbre intermédiaire (figure 1b). Le pignon supplémentaire 4 permet d'inverser le sens de rotation du pignon de l'arbre intermédiaire, et par conséquent celui de l'arbre de sortie.

Ce réducteur présente néanmoins l'inconvénient qu'il ne comporte qu'une seule ligne de transmission de couple, ce qui le rend assez encombrant puisque les pignons doivent être dimensionnés pour transmettre tout le couple nécessaire de l'arbre d'entrée à l'arbre de sortie.

Un autre type de réducteur connu est un réducteur de type composé (ou « compound » en anglais). Ce réducteur comporte deux lignes intermédiaires de transmission entre l'arbre d'entrée et l'arbre de sortie, engrenant chacune avec le pignon d'entrée de l'arbre d'entrée et le pignon de sortie de l'arbre de sortie.

Cette autre architecture apporte l'avantage d'une réduction d'encombrement car le couple transmis par l'arbre d'entrée est réparti entre les deux lignes intermédiaires et les pignons peuvent donc être de taille plus réduite. Cependant cette architecture pose l'inconvénient de ne pas permettre d'inversion du sens de rotation entre le pignon d'entrée et le pignon de sortie.

A cet égard, on connaît des documents WO 2015/034732 et FR 2355713 des réducteurs composés configurés pour inverser le sens de rotation entre pignon d'entrée et pignon de sortie. Cependant, l'architecture de tels réducteurs entraîne un encombrement important.

Le document US 2013/160605 décrit un réducteur à trois étages et à voies multiples qui transmet le couple d'un moteur à grande vitesse à un arbre de sortie à faible vitesse.

Le document US 2007/219044 décrit un réducteur présentant une configuration planétaire en étoile avec des arbres d'entraînement creux pour relier les engrenages entre eux.

Le document WO 2011/124603 décrit un réducteur comprenant un arbre d'entrée, un arbre intermédiaire et au moins deux arbres de sortie.

Le document FR 2 561 341 décrit un réducteur comprenant deux vis sans fin et des pignons.

Le document US 5,528,960 décrit un arbre cannelé autour duquel sont montés des engrenages hélicoïdaux.

Le document EP 0 172 104 décrit un réducteur comprenant un arbre d'entrée, un arbre torsible et un train d'engrenages.

### PRESENTATION DE L'INVENTION

Un but de l'invention est de remédier au moins en partie aux inconvénients de l'art antérieur.

En particulier, un but de l'invention est de proposer un réducteur composé qui permette d'inverser le sens de rotation entre le pignon d'entrée et le pignon de sortie.

Un autre but de l'invention est de proposer plusieurs variantes en limitant au maximum le nombre de pièces différentes d'une version à l'autre afin de limiter les coûts de production.

Un autre but de l'invention est de conserver le rapport de réduction du réducteur indépendamment de l'inversion du sens de rotation entre l'arbre d'entrée et l'arbre de sortie.

Un autre but de l'invention est de proposer un réducteur comprenant une répartition homogène des efforts.

A cet égard, l'invention a pour objet un réducteur de vitesse tel que décrit dans la revendication 1.

Des modes de réalisation du réducteur de vitesse selon l'invention sont définis dans les revendications 2 à 5.

L'invention a également pour objet une turbomachine telle que décrite dans la revendication 6.

Le réducteur selon l'invention comporte deux lignes intermédiaires de transmission de couple, qui engrènent avec le pignon d'entrée de l'arbre d'entrée et le pignon de sortie de l'arbre de sortie, et permettent l'inversion du sens de rotation entre l'arbre d'entrée et l'arbre de sortie en étant réalisés en deux parties propres à s'engrener. Ainsi le réducteur proposé présente les avantages d'un réducteur composé de l'art antérieur en termes d'encombrement, tout en permettant une inversion du sens de rotation entre l'arbre d'entrée et l'arbre de sortie.

En particulier, les lignes intermédiaires de transmission comprennent chacune un arbre comportant un premier et un deuxième étage de dentures montés solidaires en rotation, et un pignon supplémentaire intercalé entre l'arbre et le pignon d'entrée ou le pignon de sortie.

Le fait de décaler axialement le pignon d'entrée ou le pignon de sortie, le cas échéant en l'intercalant entre les positions axiales des étages de dentures des arbres intermédiaires, permet encore de limiter l'encombrement du réducteur. L'encombrement est également limité lorsque le pignon d'entrée ou de sortie, les pignons supplémentaires, et les dentures correspondantes des arbres intermédiaires sont coplanaires.

En outre, l'utilisation d'un arbre d'entrée ou de sortie sur lequel le pignon est monté avec une position axiale variable permet de fabriquer les mêmes pièces pour construire différentes variantes du réducteur en déplaçant juste la position du pignon. Ceci permet de réduire les coûts de fabrication du réducteur, par exemple dans le cas où des variantes inversées et non inversées du même réducteur sont montées sur le même aéronef.

Enfin, les positions des pignons supplémentaires peuvent être adaptées pour répartir au mieux les efforts dans le réducteur. En particulier, une bonne répartition des efforts est obtenue pour des positions diamétralement opposées de ces pignons relativement au pignon d'entrée, quand les pignons supplémentaires engrènent avec celui-ci.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1a et 1b, déjà décrites, illustrent un réducteur de l'art antérieur respectivement sans et avec inversion du sens de rotation entre l'arbre d'entrée et l'arbre de sortie.
- Les figures 2a à 2e représentent schématiquement des variantes de réalisation d'un réducteur comprenant des lignes intermédiaires de transmission en deux parties, comportant chacune un arbre intermédiaire et un pignon supplémentaire interposé entre le pignon d'entrée et l'arbre intermédiaire,
- Les figures 3a à 3c représentent schématiquement des variantes de réalisation d'un réducteur comprenant des lignes intermédiaires de transmission en deux parties, comportant chacun un arbre intermédiaire et un pignon supplémentaire interposé entre le pignon de sortie et l'arbre intermédiaire.

### DESCRIPTION DETAILLEE D'AU MOINS UN MODE DE REALISATION DE L'INVENTION

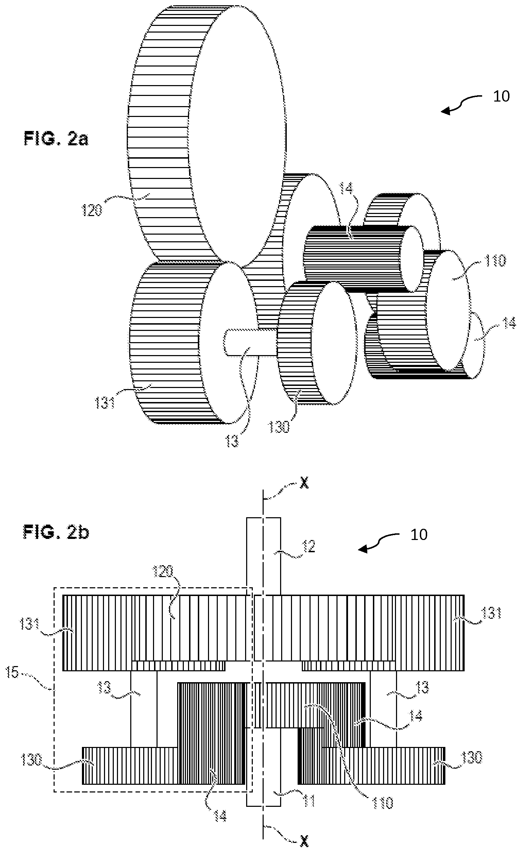

En référence aux figures 2a à 3c, on va maintenant décrire un réducteur 10 de vitesse pouvant typiquement être utilisé dans une turbomachine, particulièrement dans un turbopropulseur, entre l'arbre moteur et l'arbre de l'hélice d'un aéronef (le réducteur peut être appelé PGB ou Power Gear Box).

Le réducteur 10 comprend un arbre d'entrée 11, typiquement solidaire en rotation d'un arbre moteur de la turbomachine. L'arbre d'entrée 11 est muni d'un pignon dit d'entrée 110. Comme on va le voir par la suite, le pignon 110 peut se trouver à une extrémité de l'arbre d'entrée 11 ou au voisinage de l'extrémité.

Le réducteur 10 comprend également un arbre de sortie 12 typiquement solidaire en rotation d'un arbre d'hélice. L'arbre de sortie 12 est muni d'un pignon dit de sortie 120, pouvant également être positionné à une extrémité de l'arbre ou au voisinage de cette extrémité.

Le réducteur 10 comprend en outre deux lignes intermédiaires 15 de transmission de couple entre le pignon d'entrée 110 de l'arbre d'entrée 11 et le pignon de sortie 120 de l'arbre de sortie 12.

A cet égard, chaque ligne intermédiaire comporte un premier pignon engrenant avec le pignon d'entrée 110 et un deuxième pignon engrenant avec le pignon de sortie 120.

Ainsi l'arbre d'entrée 11 transmet aux deux lignes intermédiaires 15 un couple total réparti entre les deux lignes du réducteur 10. Le couple est ensuite transmis des lignes intermédiaires à l'arbre de sortie 12.

De plus, pour permettre une inversion du sens de rotation entre le pignon d'entrée et le pignon de sortie, chaque ligne intermédiaire comporte deux parties pouvant s'engrener.

Chaque ligne intermédiaire de transmission 15 comporte un arbre intermédiaire 13, et un pignon supplémentaire 14 intercalé entre l'arbre 13 et le pignon d'entrée 110 ou le pignon de sortie 120.

Les arbres intermédiaires 13 des deux lignes 15 s'étendent selon des axes de rotation respectifs parallèles entre eux. Les axes de rotations des arbres intermédiaires sont également parallèles aux axes de rotation de l'arbre d'entrée 11 et de l'arbre de sortie 12, qui sont typiquement confondus en un axe noté X-X sur les figures.

Chaque arbre intermédiaire 13 comporte un premier étage de dentures 130, et un deuxième étage de dentures 131, les deux étages de dentures étant de préférence positionnés aux extrémités de chaque arbre intermédiaire 13 et étant solidaires en rotation. Par exemple, les deux étages de dentures peuvent être solidaires d'une tige s'étendant entre eux.

Le réducteur 10 comprend ainsi deux arbres de transmission 13 et deux pignons supplémentaires 14, qui sont interposés respectivement entre chaque arbre intermédiaire 13 et l'arbre de sortie 12 ou l'arbre d'entrée 11.

Alors pour chaque ligne intermédiaire de transmission 15, le premier pignon engrénant avec le pignon d'entrée peut être le premier étage de dentures 130 de l'arbre 13, ou le pignon supplémentaire 14, et le deuxième pignon engrénant avec le pignon de sortie 120 est respectivement le pignon supplémentaire 14 ou le deuxième étage de dentures 131.

De cette manière, le réducteur comporte deux lignes parallèles composées chacune du pignon d'entrée 110, d'un arbre intermédiaire 13, d'un pignon supplémentaire 14 et du pignon de sortie 120, et comprenant trois étages d'engrenages successifs, ce qui provoque une inversion du sens de rotation de l'arbre de sortie 12 par rapport à l'arbre d'entrée 11. Cette inversion du sens de rotation provient du fait que chaque étage d'engrenage extérieur (ce qui est le cas pour tous les engrenages composant le réducteur) inverse le sens de rotation entre les pignons qui le constituent.

Les dentures des différents pignons sont quelconques ; elles peuvent être droites, hélicoïdales, etc.

### Variantes de positionnement des pignons supplémentaires

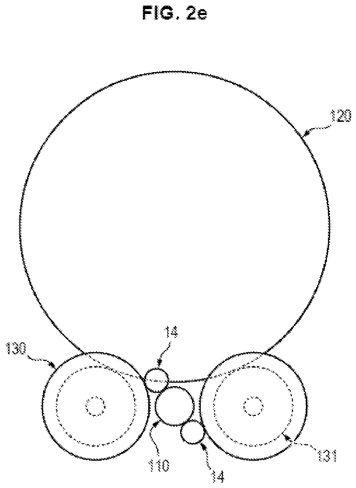

Selon un premier mode de réalisation, dont des variantes sont représentées sur les figures 2a à 2e, la variante de la figure 2e n'appartenant pas à l'invention, chaque pignon supplémentaire 14 est interposé entre le pignon d'entrée 110 et le premier étage de dentures 130 de chaque arbre intermédiaire. En d'autres termes, chaque pignon supplémentaire 14 engrène avec le pignon d'entrée 110 d'une part, et avec le premier étage de dentures 130 d'un arbre intermédiaire 13 respectif d'autre part.

Les pignons supplémentaires 14 peuvent présenter deux configurations différentes relativement au pignon d'entrée 110.

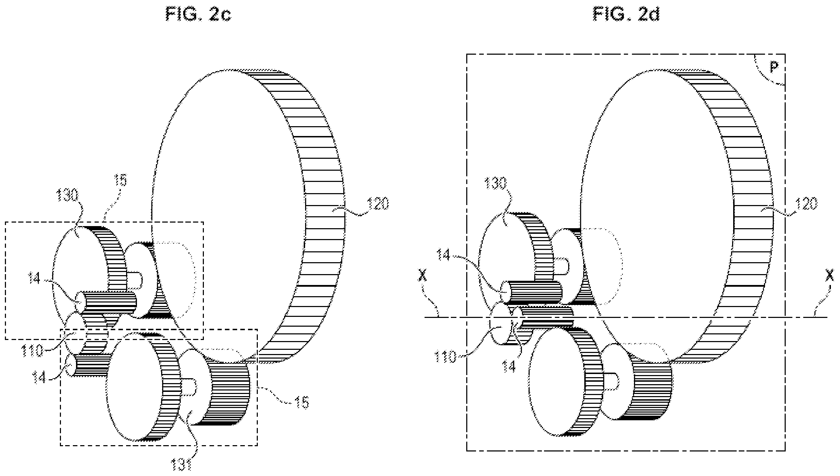

Selon une configuration préférée représentée sur les figures 2a, 2b, 2c et 2e, les pignons supplémentaires 14 présentent des positions diamétralement opposées par rapport à l'axe X-X de rotation du pignon d'entrée 110. Ceci permet une répartition optimale des efforts transmis par le pignon d'entrée aux pignons supplémentaires.

Selon une variante de configuration représentée sur la figure 2d, les pignons supplémentaires peuvent présenter des positions symétriques par rapport à un plan P orthogonal au plan dans lequel sont inscrits les axes de rotations des arbres intermédiaires 13. L'axe X-X est inscrit dans le plan P.

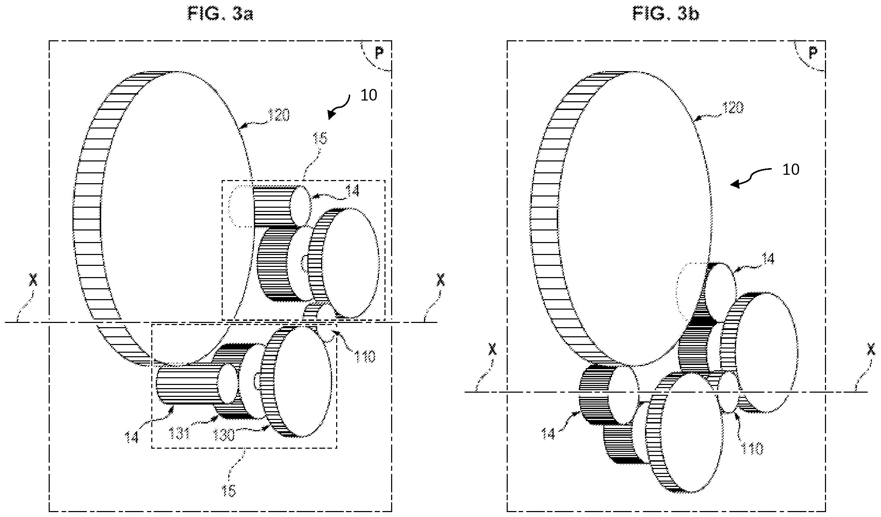

Selon un deuxième mode de réalisation dont des variantes sont représentées sur les figures 3a à 3c, la variante de la figure 3b n'appartenant pas à l'invention, chaque pignon supplémentaire 14 est interposé entre le deuxième étage de dentures 131 d'un arbre intermédiaire respectif et le pignon 120 de sortie. En d'autres termes, chaque pignon supplémentaire 14 engrène d'une part avec le deuxième étage de dentures 131 d'un arbre intermédiaire respectif et engrène d'autre part avec le pignon 120 de sortie.

Dans ce mode de réalisation les pignons supplémentaires peuvent aussi présenter deux configurations différentes relativement au pignon de sortie 120.

Selon une première configuration représentée sur les figures 3a et 3b, les pignons supplémentaires 14 sont disposés en deux positions symétriques par rapport au plan P défini ci-avant, de part et d'autre des étages de dentures 131 des arbres intermédiaires 13. En d'autres termes, la distance entre l'axe de rotation de chaque pignon supplémentaire 14 et le plan P est supérieure à la distance entre l'axe de rotation de chaque arbre intermédiaire et le plan P.

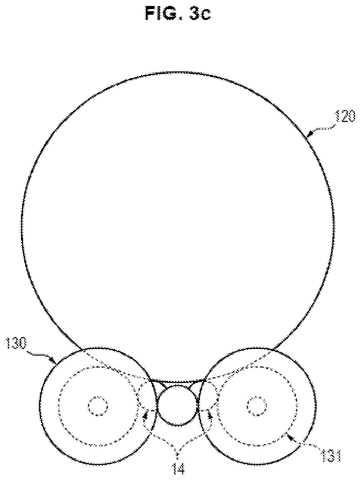

Selon une variante de configuration représentée sur la figure 3c, les pignons supplémentaires 14 sont disposés en deux positions symétriques par rapport au plan P défini ci-avant, en étant positionnés entre les arbres intermédiaires 13. En d'autres termes, la distance entre l'axe de rotation de chaque pignon supplémentaire 14 et le plan P est inférieure à la distance entre l'axe de rotation de chaque arbre intermédiaire et le plan P.

### Rotation libre du pignon d'entrée ou de sortie par rapport à l'arbre intermédiaire

Quel que soit le mode de réalisation employé parmi les deux modes de réalisation introduits ci-avant, le pignon d'entrée 110 ou de sortie 120 qui engrène avec les pignons supplémentaires 14 doit être adapté pour ne pas engrener avec l'étage de dentures correspondant des arbres intermédiaires 13, c'est-à-dire pour pivoter librement par rapport à cet étage de dentures. Pour ce faire, plusieurs variantes peuvent être mises en œuvre.

### Décalage axial du pignon d'entrée / de sortie

Une première possibilité pour que le pignon d'entrée 110 ou de sortie 120 n'engrène pas avec les dentures respectives 130, 131 des arbres intermédiaires 13 est de le décaler axialement par rapport à ces dentures, c'est-à-dire de lui conférer une position axiale sur l'axe X-X différente de celle des dentures.

Ainsi, pour le cas où les pignons supplémentaires 14 sont interposés entre le pignon d'entrée 110 et le premier étage de dentures 130, le pignon d'entrée 110 peut être décalé axialement par rapport au premier étage de dentures 130, comme c'est le cas sur les figures 2a à 2d. Dans ce cas, chaque pignon supplémentaire s'étend axialement depuis le pignon d'entrée 110 à cet étage de dentures 130 afin de pouvoir engrener avec les deux.

Dans le cas où les pignons supplémentaires 14 sont interposés entre le pignon de sortie 120 et le deuxième étage de dentures 131, le pignon de sortie 120 est décalé axialement par rapport au deuxième étage de dentures 131, comme c'est le cas sur les figures 3a et 3c. Dans ce cas, chaque pignon supplémentaire 14 s'étend axialement depuis le deuxième étage de dentures 131 de l'arbre intermédiaire respectif 13 au pignon de sortie 120 afin de pouvoir engrener avec les deux.

Le décalage peut lui-même être mis en oeuvre de plusieurs manières.

Selon une première manière, l'étage de dentures des arbres intermédiaires 13 engrenant avec les pignons supplémentaires 14 peut présenter une position axiale le long de l'axe X-X strictement comprise entre les positions axiales des pignons d'entrée 110 et de sortie 120, ce qui est obtenu en décalant respectivement le pignon d'entrée 110 vers l'amont ou le pignon de sortie 120 vers l'aval. Dans toute la suite, les notions d'amont et d'aval sont définies par rapport à la direction de transmission du couple : l'amont est du côté de l'arbre d'entrée et l'aval est du côté de l'arbre de sortie.

Cette variante appliquée au premier mode de réalisation dans lequel les pignons supplémentaires 14 engrènent avec le pignon d'entrée 110 et les premiers étages de dentures 130 des arbres intermédiaires est la suivante : le pignon d'entrée est décalé axialement vers l'amont par rapport au premier étage de dentures 130, c'est-à-dire qu'il est plus éloigné de la position axiale du pignon de sortie 120 que ledit étage 130. De fait, le premier étage 130 des arbres intermédiaires 13 se trouve à une position axiale strictement comprise entre celle du pignon d'entrée 110 et celle du pignon de sortie 120, comme cela est visible sur les figure 2a, 2c et 2d.

Cette même variante appliquée au second mode de réalisation dans lequel les pignons supplémentaires 14 engrènent avec le pignon de sortie 120 et les deuxièmes étages de dentures 131 des arbres intermédiaires 30 est la suivante : le pignon de sortie 120 est décalé axialement vers l'aval, c'est-à-dire qu'il est plus éloigné de la position axiale du pignon d'entrée 110 que l'étage 131. De fait, le deuxième étage 131 de dentures des arbres intermédiaires 13 se trouve à une position axiale strictement comprise entre celle du pignon de sortie 120 et celle du pignon d'entrée 110, comme cela est visible sur la figure 3a.

Selon une seconde variante, celui du pignon d'entrée 110 ou du pignon de sortie 120 engrenant avec les pignons supplémentaires 14 peut présenter une position axiale strictement comprise entre les positions axiales des deux étages de dentures 130, 131 des arbres intermédiaires 13.

Cette variante appliquée au premier mode de réalisation est la suivante : le pignon d'entrée 110 est décalé axialement vers l'aval, c'est-à-dire vers l'arbre de sortie 12, de manière à présenter une position axiale comprise strictement entre les deux étages de dentures 130, 131 des arbres intermédiaires 13, comme c'est le cas sur la figure 2b.

Cette même variante appliquée au second mode de réalisation est la suivante : le pignon de sortie est décalé axialement vers l'amont, c'est-à-dire vers l'arbre d'entrée 11, de manière à présenter une position axiale comprise strictement entre les deux étages de dentures 130, 131 des arbres intermédiaires 13 (variante non représentée).

Dans tous les cas de décalage du pignon d'entrée 110 ou de sortie 120, le pignon d'entrée 110 ou de sortie 120 est rapporté sur son arbre respectif d'entrée ou de sortie, en adoptant une position axiale variable sur celui-ci.

Ceci permet, en utilisant les mêmes arbres et les mêmes pignons, de pouvoir positionner le pignon en différentes positions axiales sur un arbre, et donc de pouvoir mettre en œuvre des variantes différentes de réducteur 10. Ainsi, il n'est pas nécessaire de produire des pièces différentes pour des réducteurs avec et sans inversion, destinés à être montés sur un même aéronef pour lui conférer deux sens différents de rotation des hélices, et le coût de fabrication des pièces en est diminué.

On pourra dans ce cas configurer les arbres d'entrée ou de sortie à une longueur telle que leur extrémité se trouve en une position axiale disposée entre les positions axiales des étages de dentures des arbres intermédiaires, et positionner, au besoin, le pignon d'entrée ou de sortie, soit à l'extrémité de l'arbre respectif, soit avant l'extrémité, dans le cas où le pignon d'entrée est décalé vers l'amont- respectivement le pignon d'aval décalé vers l'aval.

### Positions coplanaires des pignons d'entrée / de sortie avec les dentures des arbres intermédiaires

En référence par exemple à la figure 3b, une deuxième possibilité (non revendiquée) pour que le pignon d'entrée 110 ou de sortie 120 n'engrène pas avec les dentures respectives 130, 131 des arbres intermédiaires 13 est de le maintenir dans le même plan que ces dentures, mais en conformant le pignon et l'étage de denture de manière à ce qu'ils n'engrènent pas.

Pour ce faire, une première variante de réalisation est d'adapter le diamètre du pignon d'entrée 110 ou du pignon de sortie 120 engrenant avec les pignons d'inversion, en adaptant le nombre de dents de ce pignon. Le nombre de dents de l'étage de dentures des arbres intermédiaires 13 engrenant avec les pignons d'inversion peut être adapté de la même manière pour conserver un rapport de réduction désiré.

Par exemple, à cause de l'encombrement résultant des pignons supplémentaires 14, le nombre de dents du pignon d'entrée et de sortie peut être diminué par rapport à une configuration du réducteur dépourvue de pignons d'inversion, et le nombre de dents de l'étage de dentures correspondant peut être diminué de la même proportion.

Une seconde variante de réalisation consiste à adapter le module du pignon d'entrée ou du pignon de sortie 120 engrenant avec les pignons supplémentaires 14, et d'adapter de la même manière le module de l'étage de dentures des arbres intermédiaires 13 engrenant avec ces pignons. Cette variante présente l'avantage de conserver un rapport de réduction rigoureusement identique par rapport à un réducteur équivalent dépourvu de pignons d'inversion.

Comme on l'aura compris, les caractéristiques principales suivantes sont combinables entre elles, indépendamment des variantes de réalisation qui sont implémentées:
- L'étage de réduction où sont intercalés les pignons supplémentaires (c'est-à-dire entre le pignon d'entrée et les arbres intermédiaires ou entre les arbres intermédiaires et le pignon de sortie), et
- La façon dont le pignon d'entrée ou de sortie est adapté pour être libre en rotation avec l'étage de dentures correspondant.

Notamment les figures 2a à 3c illustrent quelques exemples de combinaison de variantes de réalisation qui sont résumées ci-dessous.

Les figures 2a et 2c illustrent un exemple dans lequel les pignons supplémentaires 14 sont interposés entre le pignon d'entrée 110 et le premier étage de dentures 130 des arbres intermédiaires 13. Les pignons supplémentaires 14 sont disposés à des positions diamétralement opposées par rapport au pignon d'entrée 110. Le pignon d'entrée est décalé vers l'amont pour ne pas engrener avec le premier étage de dentures 130 des arbres intermédiaires 13.

La figure 2b illustre un exemple dans lequel les pignons supplémentaires 14 sont interposés entre le pignon d'entrée 110 et le premier étage de dentures 130 des arbres intermédiaires 13. Les pignons supplémentaires 14 sont disposés à des positions diamétralement opposées par rapport au pignon d'entrée 110. Le pignon d'entrée est décalé vers l'aval pour ne pas engrener avec le premier étage de dentures 130 des arbres intermédiaires 13.

La figure 2d illustre un exemple dans lequel les pignons supplémentaires 14 sont interposés entre le pignon d'entrée 110 et le premier étage de dentures 130 des arbres intermédiaires 13. Les pignons supplémentaires 14 sont disposés à des positions symétriques par rapport au plan P. Le pignon d'entrée est décalé vers l'amont pour ne pas engrener avec le premier étage de dentures 130 des arbres intermédiaires 13.

La figure 2e illustre un exemple (non revendiqué) dans lequel les pignons supplémentaires 14 sont interposés entre le pignon d'entrée 110 et le premier étage de dentures 130 des arbres intermédiaires 13. Les pignons supplémentaires 14 sont disposés à des positions diamétralement opposées par rapport au pignon d'entrée 110. Le pignon d'entrée et le premier étage de dentures 130 des arbres intermédiaires 13 sont coplanaires et conformés pour ne pas engrener.

La figure 3a illustre un exemple dans lequel les pignons supplémentaires 14 sont interposés entre le deuxième étage de denture 131 des arbres intermédiaires et le pignon de sortie 120. Les pignons supplémentaires 14 sont disposés de part et d'autres desdits étages 131. Le pignon de sortie est décalé axialement vers l'aval pour ne pas engrener avec lesdits étages 131.

La figure 3b illustre un exemple (non revendiqué) dans lequel les pignons supplémentaires 14 sont interposés entre le deuxième étage de denture 131 des arbres intermédiaires et le pignon de sortie 120. Les pignons d'inversion 14 sont disposés de part et d'autres desdits étages 131. Le pignon de sortie et le deuxième étage de dentures 131 des arbres intermédiaires 13 sont coplanaires et conformés pour ne pas engrener.

La figure 3c illustre un exemple dans lequel les pignons supplémentaires 14 sont interposés entre le deuxième étage de denture 131 des arbres intermédiaires et le pignon de sortie 120. Les pignons supplémentaires 14 sont disposés entre lesdits étages 131. Le pignon de sortie est décalé axialement (vers l'amont ou l'aval) pour ne pas engrener avec lesdits étages 131.

Une variante équivalente (non revendiquée) du mode de réalisation présenté ci-dessus dans lequel chaque ligne 15 de transmission comprend un arbre 13 pourvu de deux étages de dentures et un pignon supplémentaire 14 consiste à remplacer l'arbre 13 par un arbre plus court, et le pignon supplémentaire par un deuxième arbre également pourvu de deux étages de dentures, dont un étage joue le rôle du pignon 14 et l'autre engrène avec le premier arbre. Cette variante n'est pas représentée.

## Revendications

1. Réducteur de vitesse (10), comprenant
- un arbre d'entrée (11), comprenant un pignon d'entrée (110),
- un arbre de sortie (12), comprenant un pignon de sortie (120), et
- deux lignes intermédiaires de transmission (15), chaque ligne intermédiaire de transmission (15) comprenant :
∘ un arbre intermédiaire (13) comprenant un premier étage de dentures (130) et un deuxième étage de dentures (131), lesdits étages étant solidaires en rotation, et
∘ un pignon supplémentaire (14), propre à engrener avec respectivement le premier étage de dentures (130) et le pignon d'entrée (110), ou avec le deuxième étage de dentures (131) et le pignon de sortie (120), le pignon d'entrée (110) ou de sortie (120) engrenant avec les pignons supplémentaires (14) étant décalé axialement par rapport à l'étage de dentures (130, 131) des arbres intermédiaires (13) engrenant avec lesdits pignons supplémentaires (14),
l'arbre d'entrée (11) transmettant aux deux lignes intermédiaires de transmission (15) un couple total réparti entre les deux lignes intermédiaires de transmission (15), le couple étant ensuite transmis des lignes intermédiaires de transmission (15) à l'arbre de sortie (12),
le réducteur de vitesse (10) étant **caractérisé en ce que** le pignon d'entrée (110) ou de sortie (120) engrenant avec les pignons supplémentaires (14) est rapporté sur l'arbre respectif (11, 12) avec une position axiale variable.

2. Réducteur de vitesse (10) selon la revendication 1, dans lequel un étage de dentures (130, 131) des arbres intermédiaires (13) engrenant avec un pignon supplémentaire (14) présente une position axiale strictement comprise entre les positions axiales du pignon d'entrée (110) et du pignon de sortie (120).

3. Réducteur de vitesse (10) selon la revendication 1, dans lequel le pignon d'entrée (110) ou le pignon de sortie (120) engrenant avec les pignons supplémentaires (14) présente une position axiale strictement comprise entre les positions axiales des deux étages de dentures (130, 131) des deux arbres intermédiaires (13).

4. Réducteur de vitesse (10) selon l'une des revendications 1 à 3, dans lequel les pignons supplémentaires (14) engrènent avec le pignon d'entrée (110) et le premier étage de dentures (130) de chaque arbre intermédiaire (13), et les pignons supplémentaires (14) sont disposés :
- en deux positions diamétralement opposées par rapport à l'axe de rotation (X-X) du pignon d'entrée (110), ou
- en deux positions symétriques par rapport à un plan (P) orthogonal au plan formé par les axes de rotation des arbres intermédiaires (13), à égale distance de ceux-ci.

5. Réducteur de vitesse (10) selon l'une des revendications 1 à 3, dans lequel les pignons supplémentaires (14) engrènent avec le pignon de sortie (120) et le deuxième étage (131) de dentures de chaque arbre intermédiaire (13), et les pignons supplémentaires (14) sont disposés en deux positions symétriques par rapport à un plan (P) orthogonal au plan formé par les axes de rotation des arbres intermédiaires (13), à égale distance de ceux-ci, et
- entre les arbres intermédiaires (13), ou
- de part et d'autre des arbres intermédiaires (13).

6. Turbomachine, comprenant un réducteur de vitesse (10) selon l'une des revendications précédentes.

## Patentansprüche

1. Untersetzungsgetriebe (10), umfassend
- eine Eingangswelle (11), umfassend ein Eingangszahnrad (110),
- eine Ausgangswelle (12), umfassend ein Ausgangszahnrad (120), und
- zwei mittlere Übertragungsstrecken (15), wobei jede mittlere Übertragungsstrecke (15) umfasst:
o eine mittlere Welle (13), die eine erste Verzahnungsstufe (130) und eine zweite Verzahnungsstufe (131) umfasst, wobei die Stufen rotatorisch fest verbunden sind, und
o ein zusätzliches Zahnrad (14), das imstande ist, jeweils in die erste Verzahnungsstufe (130) und das Eingangszahnrad (110) oder in die zweite Verzahnungsstufe (131) und das Ausgangszahnrad (120) einzugreifen, wobei das Eingangszahnrad (110) oder Ausgangszahnrad (120), das in die zusätzlichen Zahnräder (14) eingreift, in Bezug auf die Verzahnungsstufe (130, 131) der mittleren Wellen (13) axial versetzt ist, die in die zusätzlichen Zahnräder (14) eingreift,
wobei die Eingangswelle (11) an die zwei mittleren Übertragungsstrecken (15) ein Gesamtmoment überträgt, das zwischen den zwei mittleren Übertragungsstrecken (15) aufgeteilt ist, wobei das Moment dann von den mittleren Übertragungsstrecken (15) an die Ausgangswelle (12) übertragen wird,
wobei das Untersetzungsgetriebe (10) **dadurch gekennzeichnet ist, dass** das Eingangszahnrad (110) oder Ausgangszahnrad (120), das in die zusätzlichen Zahnräder (14) eingreift, auf der jeweiligen Welle (11, 12) mit einer variablen axialen Position angebracht ist.

2. Untersetzungsgetriebe (10) nach Anspruch 1, wobei eine Verzahnungsstufe (130, 131) der mittleren Wellen (13), die in ein zusätzliches Zahnrad (14) eingreift, eine axiale Position aufweist, die strikt zwischen den axialen Positionen des Eingangszahnrads (110) und des Ausgangszahnrads (120) liegt.

3. Untersetzungsgetriebe (10) nach Anspruch 1, wobei das Eingangszahnrad (110) oder das Ausgangszahnrad (120), das in die zusätzlichen Zahnräder (14) eingreift, eine axiale Position aufweist, die strikt zwischen den axialen Positionen der zwei Verzahnungsstufen (130, 131) der zwei mittleren Wellen (13) liegt.

4. Untersetzungsgetriebe (10) nach einem der Ansprüche 1 bis 3, wobei die zusätzlichen Zahnräder (14) in das Eingangszahnrad (110) und die erste Verzahnungsstufe (130) jeder mittleren Welle (13) eingreifen, und die zusätzlichen Zahnräder (14) angeordnet sind:
- an zwei in Bezug auf die Rotationsachse (X-X) des Eingangszahnrads (110) diametral gegenüberliegenden Positionen, oder
- an zwei in Bezug auf eine Ebene (P), die orthogonal zu der Ebene ist, die von den Rotationsachsen der mittleren Wellen (13) gebildet wird, symmetrischen Positionen in gleichem Abstand von diesen.

5. Untersetzungsgetriebe (10) nach einem der Ansprüche 1 bis 3, wobei die zusätzlichen Zahnräder (14) in das Ausgangszahnrad (120) und die zweite Verzahnungsstufe (131) jeder mittleren Welle (13) eingreifen und die zusätzlichen Zahnräder (14) an zwei in Bezug auf eine Ebene (P), die orthogonal zu der Ebene ist, die von den Rotationsachsen der mittleren Wellen (13) gebildet wird, symmetrischen Positionen in gleichem Abstand von diesen angeordnet sind, und
- zwischen den mittleren Wellen (13), oder
- beiderseits der mittleren Wellen (13).

6. Turbomaschine, umfassend ein Untersetzungsgetriebe (10) nach einem der vorangehenden Ansprüche.

## Claims

1. A speed reducer (10), comprising
- an input shaft (11), comprising an input gear (110),
- an output shaft (12), comprising an output gear (120), and
- two intermediate transmission lines (15), each intermediate transmission line (15) comprising:
∘ an intermediate shaft (13) comprising a first stage of teeth (130) and a second stage of teeth (131), said stages being secured for rotation, and
∘ an additional gear (14), fit for meshing with, respectively, the first stage of teeth (130) and the input gear (110), or with the second stage of teeth (131) and the output gear (120), the input (110) or output (120) gear meshing with the additional gears (14) being offset axially with respect to the stage of teeth (130, 131) of the intermediate shafts (13) meshing with said additional gears (14), the input shaft (11) transmitting to both intermediate lines (15) a total torque distributed between the two intermediate transmission lines (15), the torque being then transmitted from the intermediate transmission lines (15) to the output shaft (12),
the speed reducer (10) being **characterized in that** the input (110) or output (120) gear meshing with the additional gears (14) is mounted on the respective shaft (11, 12) with a variable axial position.

2. The speed reducer (10) according to claim 1, wherein a stage of teeth (130, 131) of the intermediate shafts (13) meshing with an additional gear (14) has an axial position strictly comprised between the axial positions of the input gear (110) and the output gear (120).

3. The speed reducer (10) according to claim 1, wherein the input gear (110) or the output gear (120) meshing with the additional gears (14) has an axial position strictly comprised between the axial positions of the two stages of teeth (130, 131) of the two intermediate shafts (13).

4. The speed reducer (10) according to one of claims 1 to 3, wherein the additional gears (14) mesh with the input gear (110) and the first stage of teeth (130) of each intermediate shaft (13) and the additional gears (14) are disposed:
- at two diametrically opposite positions with respect to the axis of rotation (X-X) of the input gear (110), or
- at two symmetrical positions with respect to a plane (P) orthogonal to the plane formed by the axes of rotation of the intermediate shafts (13), at equal distance therefrom.

5. The speed reducer (10) according to one of claims 1 to 3, wherein the additional gears (14) mesh with the output gear (120) and the second stage (131) of teeth of each intermediate shaft (13), and the additional gears (14) are disposed at two symmetrical positions with respect to a plane (P) orthogonal to the plane formed by the axes of rotation of the intermediate shafts (13) at equal distance therefrom, and
- between the intermediate shafts (13), or
- on either side of the intermediate shafts (13).

6. A turbomachine, comprising a speed reducer (10) according to one of the preceding claims.
